# EUROPÄISCHE PATENTSCHRIFT

(11) **EP 0 602 534 B1**
(45) Veröffentlichungstag und Bekanntmachung des Hinweises auf die Patenterteilung: **10.03.1999**
(21) Anmeldenummer: 93119818.8
(22) Anmeldetag: 08.12.1993
(51) Int. Cl.: G06K 13/107, G06K 13/12, G06K 17/00

(54) **Fördervorrichtung für gleichförmige kartenartige Elemente, insbesondere Scheck- und Ausweiskarten**
Conveyor device for uniform cardlike elements, in particular bank- and identity cards
Dispositif de transport pour des éléments uniformes du type carte, en particulier des cartes bancaires et cartes d'identité

(30) Priorität: 16.12.1992 DE 4242568
(43) Veröffentlichungstag der Anmeldung: 22.06.1994
(73) Patentinhaber: GUNTHER LOUDA GmbH, D-82041 Oberhaching (DE)
(72) Erfinder: Hast, Michael, Dipl.-Ing., D-81377 München (DE); Hentschel, Lothar, Dipl.-Ing. (FH), D-82024 Taufkirchen (DE)
(74) Vertreter: Rapp, Bertram, Dr.

(56) Entgegenhaltungen:
- WO-A-86/06855
- US-A- 2 905 466
- US-A- 2 936 169
- US-A- 2 985 299
- US-A- 3 086 771

## Beschreibung

Die Erfindung bezieht sich auf eine Fördervorrichtung für gleichförmige kartenartige Elemente nach dem Oberbegriff des Anspruchs 1.

Es ist bereits eine Vorrichtung bekannt, bei der in horizontaler Richtung hintereinander geschaltet die kartenförmigen Elemente bearbeitet bzw. vorgeschoben werden. Diese bekannte Vorrichtung kann auch für eine beidseitige Bearbeitung der Karten verwendet werden, hat jedoch aufgrund der straßenartigen Ausbildung der Fördervorrichtung insgesamt eine Länge von 4 - 6 m, so daß die Verwendung dieser Vorrichtung sehr raumverschwendend ist.

Die WO-A-86 06855 betrifft eine Fördervorrichtung für Scheck- und Ausweiskarten mit einer Kartenaufgabe, einer Bearbeitungsstation und einer Kartenübergabe. Sie weist eine taktweise drehbare Trommel auf, auf deren Außenfläche in gleichen Abständen Halterungen für die vereinzelnten Karten angeordnet sind.

Der Erfindung liegt die Aufgabe zugrunde, eine besonders raumenge Ausbildung der Fördervorrichtung mit den entsprechenden Bearbeitungsmöglichkeiten zu schaffen.

Diese Aufgabe wird durch die Merkmale des Anspruchs 1 gelöst. Vorteilhafte Ausgestaltungen sind Gegenstand der Unteransprüche.

Durch die Trommel ist es nicht nur möglich, die Kartenaufgabe und ggf. die einzelnen Bearbeitungsstufen auf engstem Raum anzuordnen, sondern es ist auch durch Veränderung des Durchmessers der Trommel möglich, mehrere Bearbeitungsstufen in Abhängigkeit von der taktweisen Weiterdrehung durchzuführen.

Nach einer besonders bevorzugten Ausführungsform der Erfindung ist die Trommel o.dgl. mit einem Vakuum beaufschlagbar; die Trommel o.dgl. kann als Hohlkörper ausgebildet und der Hohlraum mit allen Kartenhalterungen verbunden sein. Auch ist es möglich, daß die Kartenhalterungen mindestens zwei, vorzugsweise vier Vakuumzuleitungen aufweisen und die Zuleitungen auf durch in radialer Richtung nach außen offenen Halbkanäle o.dgl. miteinander in Verbindungen stehen.

Durch die Zahl der Zuleitungen, die auch größer als die eben genannte Zahl sein kann, soll die genaue Positionierung und Arretierung der Karten auf der Trommelfläche gewährleistet werden.

Nach einer weiterhin bevorzugten Ausführugnsform sind die über die Trommel seiten hinausragenden Querseiten der Karten mit pneumatischem Druck beaufschlagbar. Obgleich die Arretierung auf der Trommel ohne jegliche mechanische Mittel erfolgen soll und sich - wie bereits bemerkt - die Verwendung nur einer einzigen Vakuumquelle für alle Kartenhalterungen als besonders zweckmäßig erwiesen hat, ist es dennoch möglich, die Karten gegebenenfalls mit Druckluft zu beaufschlagen.

Auch wenn es ohne weiteres möglich ist, die einzelnen Zuleitungen jeweils durch Leitungen mit der Vakuumquelle zu verbinden, hat sich eine derartige Konstruktion als sehr aufwendig erwiesen.

Aufgrund der besonderen Form der Trommel können die über die Trommelseiten hinausragenden Querseiten der Karten jeweils mit pneumatischem Druck beaufschlagbar sein; besonders zweckmäßig ist die Welle der Trommel o.dgl. als zum Hohlraum der Trommel führende Hohlwelle ausgebildet.

Eine Bearbeitungsstufe kann als eine jeweils auf die in den Halterungen arretierte Karte einwirkende Photozelle ausgebildet sein. Insbesondere bei einer Verwendung der Fördervorrichtung zur Prüfung von Scheckkarten, Ausweiskarten o.dgl. kann diese Bearbeitungsstufe - wie eben angegeben - ausgebildet sein, wobei zweckmäßigerweise die Kartenaufgabe von unten aus erfolgt und die Photozelle diametral gegenüber oberhalb der Trommel angeordnet ist.

Eine besonders wichtige Ausführungsform der Erfindung besteht darin, daß an die Trommel o.dgl. unmittelbar eine ähnliche Trommel angeschlossen ist, an welche die Karten mit ihrer Rückseite nach oben übergeben werden. Diese Tandemanordnung hat sich insbesondere bei der Bearbeitung von Scheckkarten, Ausweiskarten oder auch anderen ähnlichen Karten als besonders zweckmäßig erwiesen, weil derartige Karten an der Oberseite und an der Rückseite in bezug z.B. auf die Schriftform, die freien Ränder, die aufgebrachten Längsstreifen o.dgl. geprüft werden müssen.

Zweckmäßigerweise ist die zweite Trommel o.dgl. in der Richtung und synchron mit der ersten Trommel o.dgl. drehbar. Auch wenn es ohne weiteres möglich ist, daß z.B. die zweite Trommel in gegenläufiger Richtung gedreht wird, hat sich diese eben genannte Tandemanordnung besonders bewährt.

Nachdem die einzelnen in den Halterungen arretierten Karten durch Sogwirkung in Wirkstellung bleiben, soll für die Lösung der Karten von der ersten Trommel und die Abgabe an die zweite Trommel eine besondere Maßnahme vorgesehen werden. Diese kann darin bestehen, daß an der Übergabestelle seitlich von der ersten Trommel Rampen o.dgl. vorgesehen sind; es ist auch möglich, daß zur Lösung der Karten von der ersten Trommel o.dgl. an der Übergabestelle die Querseiten der Karten durch Druckluft beaufschlagbar sind.

Der Ordnung halber ist darauf hinzuweisen, daß es selbstverständlich möglich ist, die Tandemanordnung noch durch weiteres Anschließen von ähnlichen Trommeln zu vergrößern, was insbesondere dann zweckmäßig oder notwendig wird, wenn mehrere Bearbeitungsstufen für die einzelnen Karten vorgesehen sind und diese Bearbeitungsstufen oder Bearbeitungsvorrichtungen nicht im Rahmen von einer oder zwei Trommeln untergebracht werden können.

Es kann auch zweckmäßig sein, bei der Kartenabgabe Rampen vorzusehen und die Karten auf einen Stapel fallenzulassen. Vorzugsweise sind die Kartenaufgabe und/oder die Kartenabgabe in Stapelform durch einen jeweils in der Höhe verstellbaren Boden steuerbar.

Sofern bei der ersten Trommel nur eine einzige Bearbeitungsvorrichtung, z.B. eine Photozelle, vorgesehen ist, kann auch die zweite Trommel o.dgl. die gleiche Bearbeitungsvorrichtung wie die erste Trommel aufweisen.

Auf der Zeichnung ist eine beispielsweise Ausführungsform dargestellt; sie wird nachfolgend näher beschrieben. Es zeigt:
- Fig. 1: eine Ausführungsform in Seitenansicht,
- Fig. 2: einen Querschnitt durch die dargestellte Ausführungsform gemäß Linie 2-2 in Fig. 1,

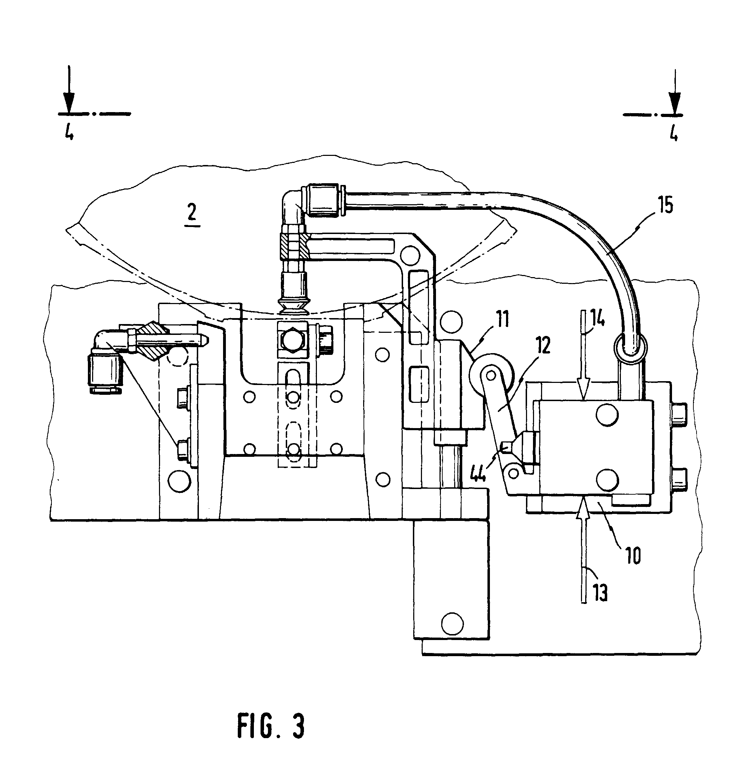

- Fig. 3: ein Detail der Kartenaufgabe in vergrößertem Maßstab in Seitenansicht,

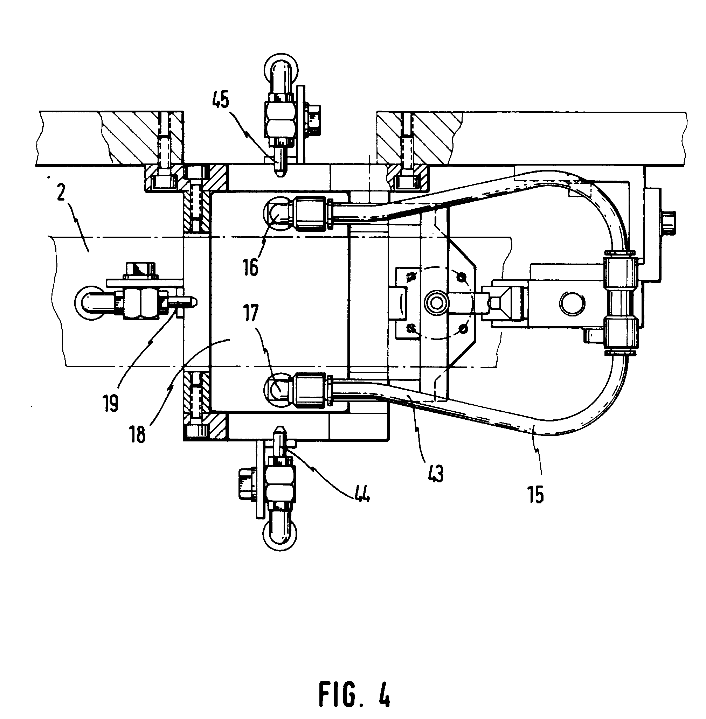

- Fig. 4: eine Ansicht auf dieses Detail nach Linie 4-4 in Fig. 3 und
- Fig. 5 und 6: Einzelheiten in bezug auf die Halterung der Karten.

Da es ohne weiteres möglich ist, sofern nur die Oberseite von Karten, z.B. Scheckkarten, Ausweiskarten, Parkstellenkarten o.dgl. einer Prüfung zu unterziehen ist, nur eine einzige Trommel vorzusehen, auch wenn bei dem nachfolgenden Ausführungsbeispiel eine Doppeltrommel, also eine Tandemanordnung vorgesehen ist, die nachfolgend in den Einzelheiten beschrieben wird.

Die dargestellte Tandemanordnung besteht aus einer Kartenaufgabevorrichtung 1, einer ersten Trommel 2, einer zweiten Trommel 3 und einer Kartenabgabe 4.

Die Kartenaufgabevorrichtung 1 weist einen Stapelschacht 5 mit einem in der Höhe verstellbaren Boden 6 auf. Die einzelnen, im Stapel enthaltenen Karten, z.B. Scheckkarten, haben die Standardgröße derartiger Karten von beispielsweise 54 x 85,6 mm. Die Karten werden mit ihren Längsseiten parallel zur Drehachse 7 der Trommel an die Trommel weitergegeben, die in Pfeilrichtung taktweise drehbar ist; die Umlaufgeschwindigkeit kann 4 Karten/s betragen.

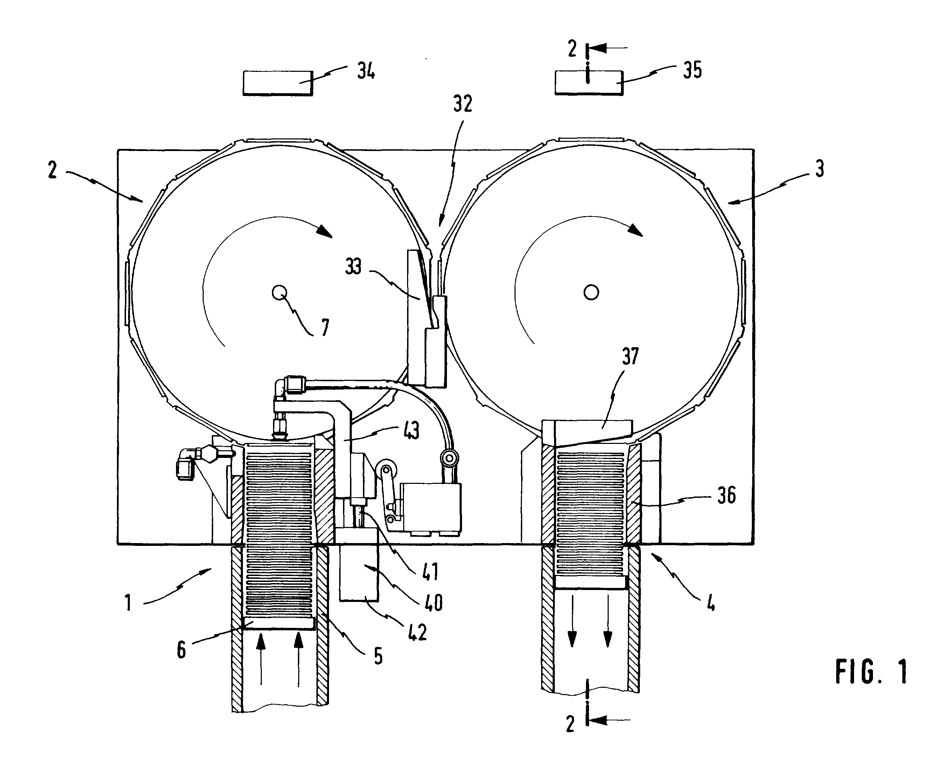

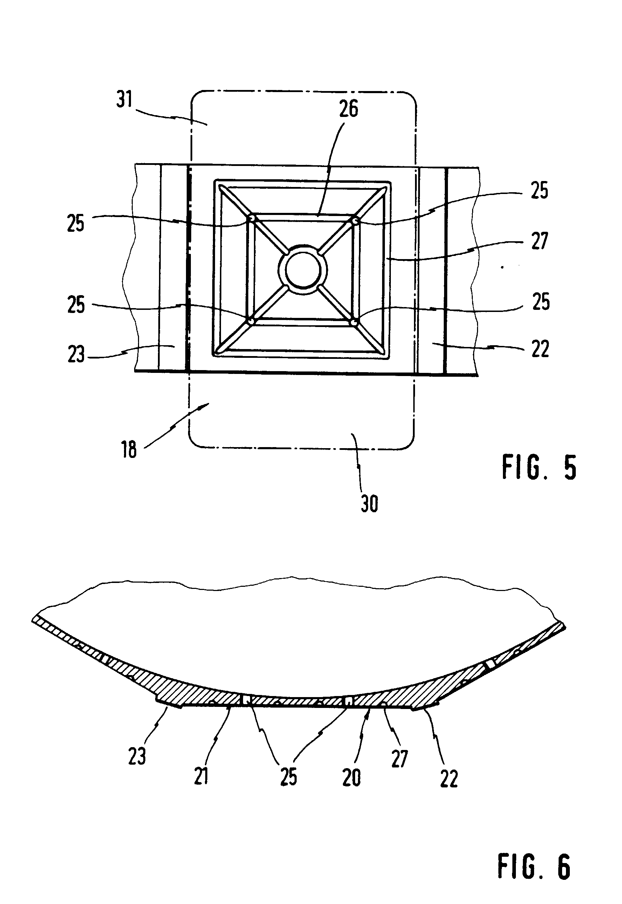

Die Aufgabevorrichtung besteht aus einem Druckluftaggregat 10, welches durch einen an der Rampenfläche 11 bewegbaren Hebel 12 jeweils ein- und ausgeschaltet wird, wobei mit dem Pfeil 13 die Aufgabe von Druckluft und mit dem Pfeil 14 die Herstellung des Vakuums angedeutet ist. Über die U-förmige Zuleitung 15, welche die Trommel 2 umgreift, wird an zwei Stellen 16 und 17 auf die Querseiten einer Karte 18 eine Sogwirkung gleichzeitig ausgeübt, so daß die oberste Karte des Stapels, wie aus Fig. 1 ersichtlich, abgehoben wird. Um zu gewährleisten, daß tatsächlich nur eine vereinzelte Karte abgehoben wird, ist mindestens eine Druckluftdüse 19 vorgesehen, die einerseits die Trennung der oberen Karte vom Stapel und andererseits auch dafür sorgt, daß die Karte 18, wie aus Fig. 5 ersichtlich ist, in die Halterung an der Trommel 2 eingebracht wird.

Die Halterung 20 der einzelnen Karten an der Außenfläche der Trommel besteht aus einer ebenen Fläche 21, zwischen deren in Achsrichtung der Trommel verlaufenden erhöhten Rändern 22 bzw. 23 die einzelne Karte in positionierter Lage gehalten wird. Die Trommel 2 ist als Hohlkörper ausgebildet, der über die Hohlwelle 24 unter Vakuum gehalten wird, wobei bei jeder Halterung 20 vier Zuleitungen 25 für das Vakuum vorgesehen sind. Um zu gewährleisten, daß die Karte auch auf der Fläche 21 glatt anliegt, sind nicht nur die Zuleitungen 25, wie aus Fig. 5 ersichtlich, durch Halbkanäle 26 quadratisch miteinander verbunden, sondern es ist noch ein weiteres Quadrat von Halbkanälen 27 vorgesehen, wobei die beiden quadratisch angeordneten Halbkanäle radiale Verbindungen und in der Mitte einen halbkreisförmigen Ringkanal aufweisen. Bei der dargestellten Ausführungsform dient die Fördervorrichtung für standardisierte Karten mit den Abmessungen von ca. 5,6 x 8,6 cm, wobei die beiden Querseiten 30 und 31 über die ca. 5 cm breite Trommel seitlich hinausragen. Diese hinausragenden Abschnitte der Karten dienen bei der Aufgabe und Abgabe oder Übergabe zum Erfassen der Karten.

Bei der in Fig. 1 dargestellten Tandemanordnung ist an der Übergabestelle 32 der Karten an die Trommel 3 eine Rampenanordnung 33 vorgesehen, die die Karten an den hinausragenden Querseiten 30 und 31 erfasst und somit von der Trommel 2 löst. Diese Rampen 33 können zusätzlich noch mit Druckluft beaufschlagt werden.

Dem Aufgabestapel bzw. Stapelschacht 5 gegenüberliegend ist eine Photozelle oder Videokamera 34 vorgesehen, welche die Karten auf der Oberseite abtastet. Nach der Übergabe an die Trommel 3 erfolgt das Abtasten der Rückseiten der Karten durch die Photozelle 35.

Durch die Videokamera werden jeweils die nicht genau dem Programm der Videokamera entsprechenden Karten aussortiert und abgeworfen. Die als fehlerfrei ermittelten Karten werden in der angezeigten Drehrichtung durch die Trommel 3 weitertransportiert und dem Abgabeschacht 36 zugeleitet, wobei oberhalb desselben und seitlich von der Trommel 3 Rampen 37 vorgesehen sind, durch welche die Karten von der Trommel 3 gelöst werden.

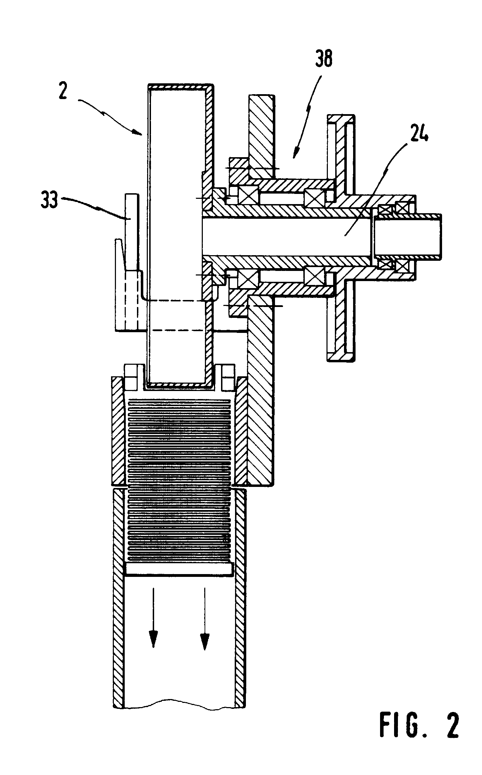

Die Hohlwelle 24 (Fig. 2) erstreckt sich durch das Synchrongetriebe 38 für den gleichzeitigen Antrieb der beiden Trommeln 2 und 3.

In bezug auf die Aufgabevorrichtung ist noch zu ergänzen, daß für die mechanische Anhebung der vereinzelten oberen Karte ein auf- und abbewegbarer Mechanismus 40 vorgesehen ist, wobei ein Hubkolben 41 in einem Hubzylinder 42 auf- und abbewegbar ist und über einen Bügel die angesaugte obere Karte aufnimmt und hält. Die Aufgabe von Druckluft durch die Düse 19 kann durch zwei sich gegenüberstehende Düsen 44 und 45 verstärkt werden.

Der Hebel 12 arbeitet mit einem vor- und zurückschiebbaren Stift 44 zusammen, welcher jeweils für die Zufuhr von Druckluft oder das Entstehen eines Vakuums sorgt.

## Patentansprüche

1. Fördervorrichtung für gleichförmige kartenartige Elemente, insbesondere Scheck- und Ausweiskarten, mit einer Kartenaufgabe (1), mindestens einer Bearbeitungsvorrichtung und einer Kartenabgabe (4) bzw. - übergabe und jeweils genau positionierten Halterungen (20) für die vereinzelten Karten (18) und mit mindestens einer taktweise drehbaren Trommel (2, 3), einem Rad o.dgl., auf deren Außenflächein gleichen Abständen die Halterungen angeordnet sind, wobei die Karten in den Halterungen durch Sogwirkung arretiert werden, dadurch gekennzeichnet, daß die Halterungen (20) eine ebene Auflagefläche (21) für die vereinzelten Karten aufweisen und aus parallel zur Drehachse verlaufenden Wülsten, Randstreifen (22, 23) o.dgl. in Anpassung an die Breite und Stärke der Karten bestehen und die Karten jeweils mit ihren Querseiten über die Trommelseite herausragen.

2. Fördervorrichtung nach Anspruch 1, dadurch gekennzeichnet, daß die Trommel (2, 3) o.dgl. mit einem Vakuum beaufschlagbar ist.

3. Fördervorrichtung nach Anspruch 2, dadurch gekennzeichnet, daß die Trommel (2, 3) o.dgl. als Hohlkörper ausgebildet und der Hohlraum mit allen Kartenhalterungen (20) verbunden ist.

4. Fördervorrichtung nach Anspruch 3, dadurch gekennzeichnet, daß die Kartenhalterungen (20) mindestens zwei, vorzugsweise vier Vakuumzuleitungen (25) aufweisen und die Zuleitungen durch in radialer Richtung nach außen offenen Halbkanäle (26, 27) o.dgl. miteinander in Verbindungen stehen.

5. Fördervorrichtung nach einem der Ansprüche 1 bis 4, dadurch gekennzeichnet, daß die über die Trommelseiten hinausragenden Querseiten (30, 31) der Karten (18) mit pneumatischem Druck beaufschlagbar sind.

6. Fördervorrichtung nach einem der Ansprüche 1 bis 5, dadurch gekennzeichnet, daß die Welle der Trommel o.dgl. als zum Hohlraum in der Trommel (2, 3) führende Hohlwelle (24) ausgebildet ist.

7. Fördervorrichtung nach einem der Ansprüche 1 bis 6, dadurch gekennzeichnet, daß eine Bearbeitungsstufe als eine jeweils auf die in den Halterungen (20) arretierte Karte (18) einwirkende Photozelle (34) ausgebildet ist.

8. Fördervorrichtung nach einem der Ansprüche 1 bis 7, dadurch gekennzeichnet, daß an die Trommel (2) o.dgl. unmittelbar eine ähnliche Trommel (3) angeschlossen ist, an welche die Karten (18) mit ihrer Rückseite nach oben übergeben werden.

9. Fördervorrichtung nach Anspruch 8, dadurch gekennzeichnet, daß die zweite Trommel (3) in der gleichen Richtung und synchron mit der ersten Trommel (2) drehbar ist.

10. Fördervorrichtung nach Anspruch 8 oder 9, dadurch gekennzeichnet, daß an der Übergabestelle (32) seitlich von der ersten Trommel Rampen (33) o.dgl. vorgesehen sind.

11. Fördervorrichtung nach Anspruch 10, dadurch gekennzeichnet, daß zur Lösung der Karten von der ersten Trommel (2) an der Übergabestelle (32) die Querseiten der Karten durch Druckluft beaufschlagbar sind.

12. Fördervorrichtung nach einem der Ansprüche 1 bis 11, dadurch gekennzeichnet, daß bei der Kartenabgabe (4) Rampen (37) vorgesehen sind und die Karten auf einen Stapel fallen.

13. Fördervorrichtung nach einem der Ansprüche 1 bis 12, dadurch gekennzeichnet, daß die Kartenaufgabe und/oder die Kartenabgabe in Stapelform durch einen jeweils in der Höhe verstellbaren Boden (6) steuerbar sind.

14. Fördervorrichtung nach einem der Ansprüche 8 bis 13, dadurch gekennzeichnet, daß die zweite Trommel (3) o.dgl. die gleiche Barbeitungsvorrichtung aufweist wie die erste Trommel (2) oder dergleichen.

## Claims

1. A conveyor mechanism for uniform cardlike elements, especially chequecards and identity cards, having one card-input (1), at least one processing device and one card outlet (4) or delivery and exactly positioned holders (20) for each of the singled cards (18), and having at least one drum (2, 3) turnable in steps, one wheel or the like upon the outer face of which the holders are arranged at equal intervals, the cards being trapped in the holders by suction, characterized in that the holders (20) exhibit a plane bearing area (21) for the singled cards and consist of beads, edge strips (22, 23) or the like in adaptation to the wodth and thickness of the cards, running in parallel with the axis of rotation, and each card projects by its transverse sides beyond the sides of the drum.

2. A conveyor mechanism as in Claim 1, characterized in that the drum (2, 3) or the like maybe acted upon by vacuum.

3. A conveyor mechanism as in Claim 2, characterized in that the drum (2, 3) or the like is made as a hollow body and the hollow is connected to all of the card-holders (20).

4. A conveyor mechanism as in Claim 3, characterized in that the card-holders (20) exhibit at least two, preferably four vacuum feed-lines (25) and the feed-lines are connected together through half-channels (25, 27) or the like open to the outside in the radial direction

5. A conveyor mechanism as in one of the Claims 1 to 4, characterized in that the transverse sides (30, 31) of the cards (18) overhanging the sides of the drum may be acted upon by pneumatic pressure.

6. A conveyor mechanism as in one of the Claims 1 to 5, characterized in that the shaft of the drum or the like is constructed as a hollow shaft (24) leadin to the hollow in the drum (2, 3).

7. A conveyor mechanism as in one of the Claims 1 to 6, characterized in that a processing step is made as a photoelectric cell (34) acting upon the card (18) trapped in the holder (20) at the time.

8. A conveyor mechanism as in one of the Claims 1 to 7, characterized in that to the drum (2) or the like a similar drum (3) is directly connected, to which the cards (18) are transferred with their backs facing upwards.

9. A conveyor mechanism as in Claim 8, characterized in that the second drum (3) is able to turn in the same direction as and in synchronism with the first drum (2).

10. A conveyor mechanism as in Claim 8 or 9, characterized in that at the transfer point (32) ramps (33) or the like are provided at the side of the first drum.

11. A conveyor mechanism as in Claim 10, characterized in that for loosening the cards from the first drum (2) at the transfer point (32) the transverse sides of the cards may be acted upon by compressed air.

12. A conveyor mechanism as in one of the Claims 1 to 11, characterized in that at the card outlet (4) ramps (37) are provided and the cards drop onto a stack.

13. A conveyor mechanism as in one of the Claims 1 to 12, characterized in that the card inlet and/or the card outlet are controllable in the form of a stack by a tray (6) adjustable for height in each case.

14. A conveyor mechanism as in one of the Claims 8 to 13, characterized in that the second drum (3) or the like exhibits the same processing device as the first drum (2) or the like.

## Revendications

1. Dispositif de transport pour des éléments uniformes du type carte, en particulier des cartes bancaires et des cartes d'identité, avec un chargement de cartes (1), au moins un dispositif de traitement et une distribution (4) ou transfert de cartes et des fixations (20) disposées chacune de façon précise pour les cartes (18) individuelles et avec au moins un tambour (2, 3) pivotant par cycle, une roue ou similaire, sur la surface extérieure duquel sont disposées les fixations à intervalles identiques, les cartes étant arrêtées dans les fixations par un effet de succion, caractérisé en ce que les fixations (20) présentent une surface d'appui (21) plane pour les cartes individuelles et comprennent des renflements parallèles à l'axe de rotation, des bandes latérales (22. 23) ou similaires, adaptés à la largeur et à l'épaisseur des cartes et les cartes dépassent chacune avec leurs faces transversales du côté du tambour.

2. Dispositif de transport selon la revendication 1, caractérisé en ce que le tambour (2, 3) ou similaire peut être alimenté avec un vide.

3. Dispositif de transport selon la revendication 2, caractérisé en ce que le tambour (2, 3) ou similaire est conçu comme un corps creux et la cavité est reliée à toutes les fixations de cartes (20).

4. Dispositif de transport selon la revendication 3, caractérisé en ce que les fixations de cartes (20) présentent au moins deux, de préférence quatre arrivées de vide (25) et les arrivées sont reliées entre elles par des demi-canaux (26, 27) ouverts dans le sens radial vers l'extérieur ou similaire.

5. Dispositif de transport selon l'une quelconque des revendications 1 à 4, caractérisé en ce que les faces transversales (30, 31) des cartes (18) dépassant du côté tambour peuvent être alimentées avec une pression pneumatique.

6. Dispositif de transport selon l'une quelconque des revendications 1 à 5, caractérisé en ce que l'arbre du tambour ou similaire est conçu comme un arbre creux (24) aboutissant à la cavité dans le tambour (2, 3).

7. Dispositif de transport selon l'une quelconque des revendications 1 à 6, caractérisé en ce qu'un niveau de traitement est réalisé sous la forme d'une cellule photoélectrique (34) agissant respectivement sur la carte (18) arrêtée dans les fixations (20).

8. Dispositif de transport selon l'une quelconque des revendications 1 à 7, caractérisé en ce qu'au tambour (2) ou similaire est raccordé directement un tambour (3) identique, auquel les cartes (18) sont transférées avec leur face supérieure vers le haut.

9. Dispositif de transport selon la revendication 8, caractérisé en ce que le deuxième tambour (3) peut tourner dans le même sens et de façon synchrone avec le premier tambour (2).

10. Dispositif selon la revendication 8 ou 9, caractérisé en ce que des rampes (33) ou similaires sont prévues au lieu de transfert (32) sur le côté du premier tambour.

11. Dispositif de transport selon la revendication 10, caractérisé en ce que, pour enlever les cartes du premier tambour (2) au point de transfert, les faces transversales des cartes peuvent être sollicitées avec de l'air comprimé.

12. Dispositif de transport selon l'une quelconque des revendications 1 à 11, caractérisé en ce que des rampes (37) sont prévues lors de la distribution des cartes (4) et les cartes tombent sur une pile.

13. Dispositif de transport selon l'une quelconque des revendications 1 à 12, caractérisé en ce que le chargement des cartes et/ou la distribution des cartes peut/peuvent être contrôlé(s) par un fond (6) pouvant être déplacé respectivement en hauteur.

14. Dispositif de transport selon l'une quelconque des revendications 8 à 13, caractérisé en ce que le deuxième tambour (3) ou similaire présente le même dispositif de traitement que le premier tambour (2) ou similaire.
